# EUROPÄISCHE PATENTSCHRIFT

(11) **EP 1 468 901 B1**
(45) Veröffentlichungstag und Bekanntmachung des Hinweises auf die Patenterteilung: **14.10.2009**
(21) Anmeldenummer: 04006506.2
(22) Anmeldetag: 18.03.2004
(51) Int. Cl.: B62D 55/084, B62D 49/06

(54) **Raupenfahrzeug mit veränderbarer Spurbreite**
Endless-track vehicles with variable tread
Engin à chenille à voie variable

(30) Priorität: 14.04.2003 DE 10317309
(43) Veröffentlichungstag der Anmeldung: 20.10.2004
(73) Patentinhaber: MACMOTER S.p.A., I-47015 Modigliana (FO) (IT)
(72) Erfinder: Haringer, Alois Johann, 39044 Neumarkt (BZ) (IT)
(74) Vertreter: Tergau & Pohl Patentanwälte

(56) Entgegenhaltungen:
- WO-A-98/40264
- US-A- 3 998 286
- US-A- 4 341 276
- US-A- 5 368 115
- US-A1- 2001 025 732

## Beschreibung

Die Erfindung betrifft ein Raupenfahrzeug mit veränderbarer Spurbreite, das insbesondere als Baufahrzeug und/oder als Fahrzeug für landwirtschaftliche Zwecke verwendbar ist und gemäß den Merkmalen des Oberbegriffes von Patentanspruch 1 ein Unterfahrzeug mit einem Fahrzeugrahmen umfaßt, an dem beidseitig je ein Fahrwerk mit einem Fahrwerkträger für mindestens je ein Antriebsrad, ein Umlenkrad und für Stützräder zum Führen von Raupen vorgesehen ist.

Derartige Raupenfahrzeuge mit veränderbarer Spurbreite sind grundsätzlich bekannt, wie z.B. US 3 998 286. Sie erfüllen aber die in sie gesetzten Erwartungen nicht in zufriedenstellender Weise, denn der technische Aufwand ist hoch und die damit verbundenen Kosten rechtfertigen oft nicht die grundsätzlich vorhandenen Vorteile, die mit der Möglichkeit zur Veränderung der Spurbreite verbunden sind.

Der Erfindung liegt daher die Aufgabe zugrunde, Maßnahmen vorzusehen, mit deren Hilfe es in technisch einfacher Weise sowie kostengünstig möglich ist, ein Raupenfahrzeug mit veränderbarer Spurbreite zu schaffen.

Diese Aufgabe wird erfindungsgemäß gelöst mit den Merkmalen des Patentanspruchs 1.

Die Halte- und Lösemittel sind vorzugsweise Bohrungen beziehungsweise Durchtrittsöffnungen und zum Befestigen dienende Schrauben und/oder Gewindebolzen mit gegebenenfalls zugeordneten Muttern. Als Trage- sowie Aufnahme- und Abstützmittel sind einerseits Tragarme und andererseits diese aufnehmende und in der Regel weit gehend oder teilweise formschlüssig umgreifende Aufnahmeteile am Fahrzeugrahmen und/oder am Fahrwerkträger angeordnet sowie zueinander fluchtend ausgerichtet. Die Tragarme können im Querschnitt mindestens teilweise U-förmig und/oder auch L-förmig sein und an ihrer Befestigungsstelle jeweils mit nach oben und/oder nach unten und/oder nach hinten geöffnetem Querschnitt angeordnet sein. Auch die Abstütz- und Aufnahmeteile weisen vorzugsweise einen U-förmigen und/oder L-förmigen Querschnitt auf.

Ein nur aus Oberfahrzeug und Unterfahrzeug bestehendes Raupenfahrzeug läßt sich daher gemäß Ausführungsbeispiel leicht auf zum Beispiel am Fahrwerkträger angeordnete und von diesem frei auskragende Tragarme aufsetzen. Ferner lassen sich sowohl das rechte als auch das linke Fahrwerk mit seinem Fahrwerkträger längs der Tragarme quer zum Fahrzeugrahmen positionieren und in einem gewünschten Abstand von Fahrzeugrahmen und Fahrwerkträger mit Hilfe von Gewindebolzen oder Schrauben und Muttern befestigen.

Die Herstellung der besagten Teile und auch die Fixierung und das Lösen der Fahrwerkträger von dem Fahrzeugrahmen und das erneute Verbinden in einer anderen Position sind daher denkbar einfach.

In Weiterbildung der Erfindung ist vorgesehen, daß jeder Fahrwerkträger zugleich auch als Träger für einen hydraulischen und/oder einen elektrischen Antrieb dient. Dies bedeutet, daß der Fahrzeugantrieb mindestens einen Hauptmotor umfaßt und daß jeweilige Antriebe für die Bewegung der Raupen unmittelbar am Fahrwerkträger selbst angeordnet sein können. Entsprechend wird eine Pumpe oder ein Generator von dem Hauptmotor angetrieben, um die Energie für die an den Fahrwerkträgern angeordneten Antriebe zur Verfügung zu stellen.

Auch die einzelnen Antriebe verändern ihre Lage bei einer Veränderung der Spurbreite entsprechend. Die einzelnen Antriebe sind vorzugsweise Hydraulikmotore und/oder Elektromotore und wirken zum Beispiel nur auf hintere Antriebsräder. Die Erfindung ist jedoch nicht darauf beschränkt. Es können auch vordere und hintere Antriebsräder mit jeweils integrierten Hydraulik- beziehungsweise Elektromotoren vorgesehen sein.

Die Energieversorgung der hydraulischen und/oder elektrischen Antriebe ist unkompliziert, da sie mit Hilfe von Schläuchen und/oder mit Hilfe von elektrischen Leitungen leicht an eine veränderte Spurbreite angepaßt werden kann.

Sofern die Spurbreite gemäß einem bevorzugten Ausführungsbeispiel im Bereich einer tragenden Achse wie zum Beispiel im Bereich einer Schwenkachse für den Fahrwerkträger verstellbar sein soll, kann eine umsteckbare Distanzbuchse vorgesehen sein. Die beim Verändern der Spurbreite durchzuführenden Arbeiten sind schließlich bei Verwendung einer Distanzbuchse für jede Achse dann minimal, wenn die Distanzbuchse gemäß einem bevorzugten Ausführungsbeispiel aus Halbschalen besteht.

Grundsätzlich kann in Weiterbildung der Erfindung auch eine Höhenverstellung zwischen dem Fahrzeugrahmen und den Fahrwerkträgern vorgenommen werden.

Weitere Merkmale der Erfindung gehen aus Unteransprüchen und der Beschreibung im Zusammenhang mit der Zeichnung hervor.

Die Erfindung wird nachstehend anhand von Ausführungsbeispielen, die in der Zeichnung dargestellt sind, näher beschrieben. Dabei zeigen:
- Fig. 1:: eine perspektivische Darstellung eines Raupenfahrzeuges mit veränderbarer Spurbreite in Gestalt eines Baufahrzeuges;
- Fig. 2:: eine perspektivische Ansicht von wesentlichen Teilen des Unterfahrzeuges mit einem am Fahrzeugrahmen befestigten Fahrwerkträger;
- Fig. 3:: ebenfalls in perspektivischer Ansicht sowie in etwas größerem Maßstab eine Darstellung des zweiten Fahrwerkträgers mit seinem hydraulischen Antrieb;

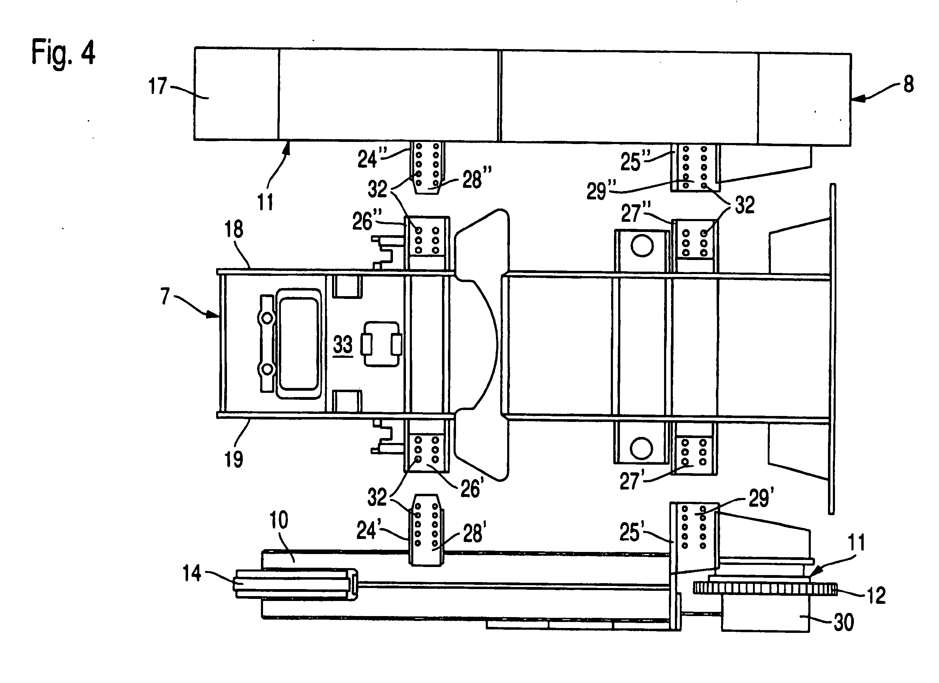

- Fig. 4:: in nochmals anderem Maßstab eine Draufsicht auf wesentliche Teile des Fahrzeugrahmens und des von ihm losgelösten rechten Fahrwerkes und des ebenfalls losgelösten linken Fahrwerkträgers mit dem dort befindlichen Antrieb;
- Fig. 5:: eine perspektivische sowie auseinander gezogene Ansicht des Fahrzeugrahmens und der beiden Fahrwerkträger in kleinerem Maßstab von einem abgewandelten Ausführungsbeispiel bzw. mit zum Teil besser verständlicher Darstellung;
- Fig. 6:: eine perspektivische Ansicht in nochmals kleinerem Maßstab des rechten Fahrwerkes eines weiteren Ausführungsbeispieles;
- Fig. 7:: eine perspektivische Ansicht des zu dem in Fig. 6 dargestellten Fahrwerk gehörenden Fahrzeugrahmens;
- Fig. 8:: eine perspektivische Ansicht des bei Vorwärtsfahrt linken Fahrwerkes für den Fahrzeugrahmen gemäß Fig. 7;
- Fig. 9:: in größerem Maßstab die Einzelheit A in Fig. 6;
- Fig. 10:: in größerem Maßstab die Einzelheit B in Fig. 7;
- Fig. 11:: in größerem Maßstab die Einzelheit C in Fig. 7;
- Fig. 12:: in größerem Maßstab die Einzelheit D in Fig. 8;
- Fig. 13:: eine Seitenansicht des Fahrzeugrahmens gemäß einem weiteren Ausführungsbeispiel mit als Tragarmen bzw. Schwenkachsen dienenden Achsen;
- Fig. 14:: eine Draufsicht auf den Fahrzeugrahmen gemäß Fig. 13;
- Fig. 15:: eine perspektivische Ansicht des Fahrzeugrahmens gemäß den Fig. 13 und 14 von links;
- Fig. 16:: eine perspektivische Ansicht wie in Fig. 15 von rechts mit einer gegenüber der Darstellung in Fig. 15 geänderten Höheneinstellung für die Fahrwerkträger;
- Fig. 17:: eine Ansicht des Fahrzeugrahmens gemäß den Fig. 13 bis 16 mit zur Verdeutlichung der Variationsmöglichkeiten unterschiedlich hoch angeordneten, als Tragarmen dienenden Achsen;
- Fig. 18:: eine Ansicht wie in Fig. 17 des Fahrzeugrahmens von vorne mit ebenfalls unterschiedlich hoch angeordneten Achsen;
- Fig. 19:: im größerem Maßstab eine Ansicht eines Aufnahme- und Abstützmittels einer Federeinrichtung gemäß der Einzelheit E in Fig. 13;
- Fig. 20:: ebenfalls im größerem Maßstab eine Ansicht der rahmenseitigen Aufnahme- und Abstützmittel im Bereich der als Tragarm dienenden Achse gemäß der Einzelheit F in Fig. 13;
- Fig. 21:: zum Teil im Schnitt eine Ansicht des Fahrzeugrahmens von vorne mit einem Fahrwerk sowie mit Teilen eines Fahrwerkträgers mit einer an dessen vorderen Ende angeordneten Federeinrichtung einschließlich einem dort vorgesehenen Distanzstücke;
- Fig. 22:: in größerem Maßstab die Einzelheit G in Fig. 21;
- Fig.23:: drei unterschiedliche Ansichten des Distanzstückes in kleinerem Maßstab aus der Einzelheit G gemäß den Fig. 21 und 22;
- Fig.24:: in größerem Maßstab einen Schnitt durch eine als Tragarm bzw. als Schwenkachse dienende Achse mit der Lage der Distanzbuchse bei geringer Spurbreite und
- Fig. 25:: eine Schnittansicht wie in Fig. 24 mit der Lage der Distanzbuchse bei großer Spurbreite.

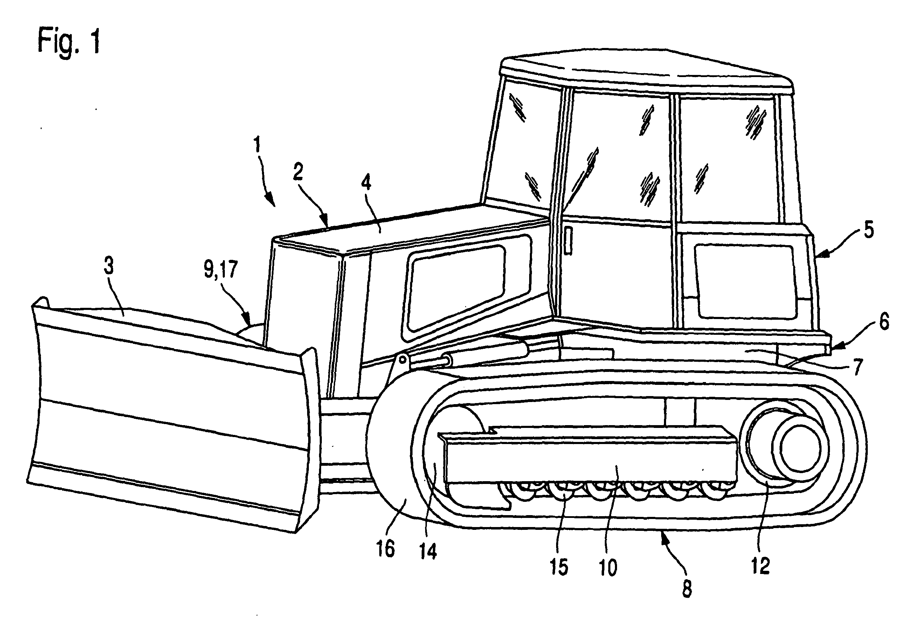

Ein in den Fig. nicht dargestelltes, Ketten- oder Raupen aufweisendes landwirtschaftliches Fahrzeug wie zum Beispiel eine Zugmaschine oder ein Traktor und gleichermaßen ein als Baufahrzeug 2 gemäß der Darstellung in Fig. 1 dienendes Raupenfahrzeug 1 sind jeweils mit den erforderlichen Mitteln zur Veränderung der Spurbreite ausgestattet und stimmen diesbezüglich überein, auch wenn die erforderlichen Mittel nachstehend nur unter Bezugnahme auf das Baufahrzeug 2 gemäß Fig. 1 beschrieben sind. Die Darstellungen in allen Fig. gelten daher gleichermaßen für landwirtschaftliche Fahrzeuge und für Baufahrzeuge.

Das Raupenfahrzeug 1 weist gemäß Fig. 1 als Baufahrzeug 2 ein Werkzeug 3 zum Beispiel in Gestalt eines Schildes oder dergleichen auf und umfaßt ferner einen Fahrzeugmotor 4 und weitere Komponenten eines Oberfahrzeuges 5 und eines Unterfahrzeuges 6. Ein wesentlicher Teil des Unterfahrzeuges 6 ist ein wannenförmiger Fahrzeugrahmen 7, an dem beidseitig je ein Fahrwerk 8 beziehungsweise 9 mit je einem Fahrwerkträger 10, 11 für mindestens je ein Antriebsrad 12, 13, für Umlenkräder 14 und für Stützräder 15 zum Führen von Raupen 16 und 17 vorgesehen ist. Die Antriebsräder 12, 13 sind Zahnräder.

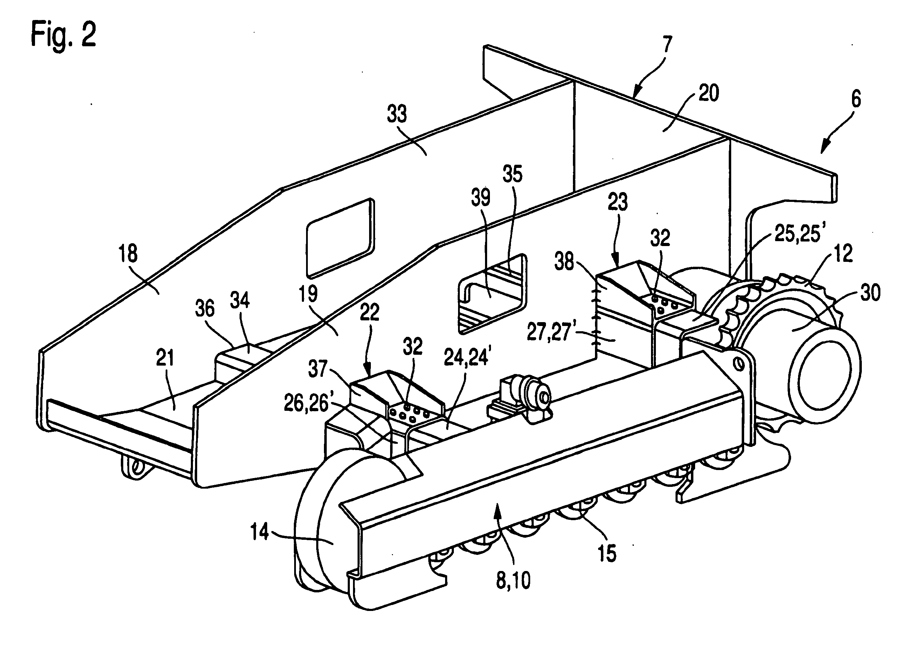

Gemäß der Darstellung in Fig. 2 umfaßt der Fahrzeugrahmen 7 eine rechte Seitenwand 18 und eine linke Seitenwand 19 sowie eine diese beiden Seitenwände 18 und 19 rückseitig verbindende Rückwand 20 und einen Boden 21.

Beide Fahrwerkträger 10, 11 sind bei dem in den Fig. dargestellten Ausführungsbeispielen mit ihren jeweiligen Komponenten zur Veränderung der Spurbreite lösbar mit dem Fahrzeugrahmen 7 verbindbar.

Zur Befestigung der Fahrwerkträger 10, 11 am Fahrzeugrahmen 7 weisen diese an einander zugewandten Seiten jeweils im Abstand voneinander angeordnete Befestigungsstellen 22 beziehungsweise 23 auf. Diese Befestigungsstellen 22, 23 werden bei dem in Fig. 2 dargestellten Ausführungsbeispiel gebildet mit Hilfe von als Tragemittel 24, 25 dienenden Tragarmen 24' und 24" beziehungsweise 25' und 25" einerseits und von als Aufnahme- und Abstützmittel 26, 27 dienenden Aufnahmeteilen 26', 26" und 27', 27" andererseits, die jeweils fluchtend an den Fahrwerkträgern 10, 11 und an dem Fahrzeugrahmen 7 angeordnet sind.

Der vordere Tragarm 24', 24" eines jeden Fahrwerkträgers 10, 11 ist im Querschnitt U-förmig und weist zwischen Seitenteilen eine Trageplatte 28' beziehungsweise 28" auf. Jeder frei auskragende Tragarm 24' beziehungsweise 24" ist zweckmäßigerweise am Fahrwerkträger 10, 11 angeschweißt.

Der andere beziehungsweise hintere Tragarm 25', 25" kann ebenfalls im Querschnitt U-förmig sein. Zweckmäßigerweise ist er jedoch im Querschnitt L-förmig.

Die Aufnahmeteile 26', 26" und 27' und 27" sind im Querschnitt ebenfalls U-förmig und/oder L-förmig.

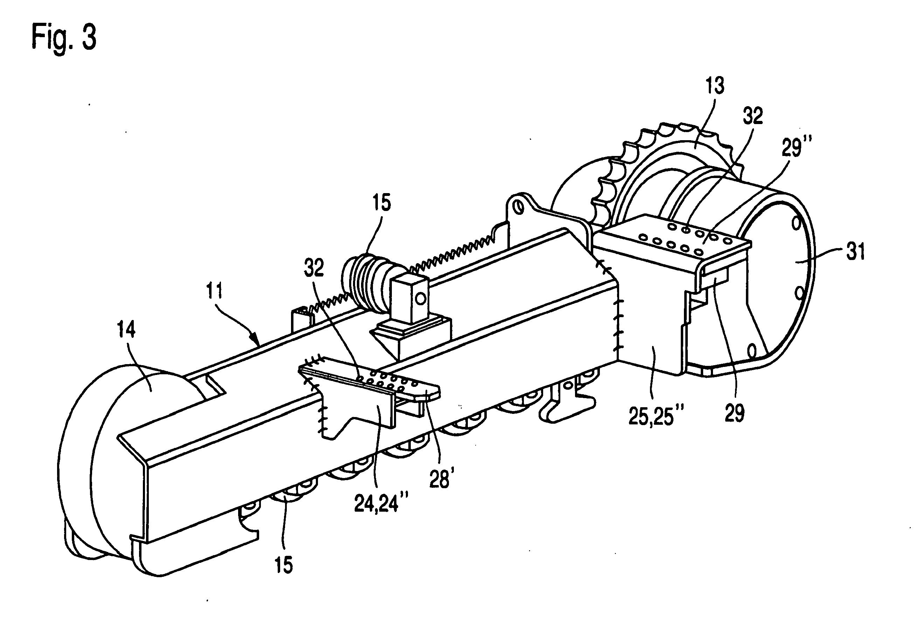

Grundsätzlich können die Tragarme 24', 24" und 25', 25" und auch die Aufnahmeteile jeweils Hohlprofile sein, da zumindest die hinteren, bei den Antriebsrädern 12, 13 befindlichen Tragarme 25', 25" vorzugsweise eine Durchtrittsöffnung 29 (Fig. 3) für nicht dargestellte Leitungen zur Energieversorgung von Antrieben 30 beziehungsweise 31 aufweisen, die an den Fahrwerkträgern 10, 11 angeordnet sind.

Alle Tragarme 24', 24" und 25', 25" sind entweder seitlich von den Fahrwerkträgern 10, 11 frei auskragend angeordnet oder stehen zumindest seitlich vor. Teleskopartig lassen sie sich in die als Aufnahme- und Abstützmittel 26, 27 dienenden, am Fahrzeugrahmen 7 angeordneten, ebenfalls seitlich vorstehenden Aufnahmeteile 26', 26" und 27', 27" wahlweise unterschiedlich weit entsprechend der gewünschten Position einsetzen und dort mit Hilfe von Halte- und Lösemitteln 32 in Gestalt von Bohrungen, Durchtrittsöffnungen, Gewindebohrungen, Gewindebolzen beziehungsweise Schrauben und gegebenenfalls Muttern lösbar fixieren.

Die jeweils frei auskragenden Aufnahmeteile 26', 26" und 27' und 27" können gemäß Ausführungsbeispiel einstückig sein und sich dazu durch die Seitenwände 18, 19 in das Innere 33 des Fahrzeugrahmens 7 erstrekken. In seinem Inneren 33 können sie miteinander verbunden sein beziehungsweise aus einem einstückigem Profilteil 34 beziehungsweise 35 bestehen, die sich jeweils mit freien Enden durch Öffnungen 36 (Fig. 2) in den Seitenwänden 18, 19 zur Bildung der Aufnahmeteile erstrecken. Zusätzlich können Konsolen 37, 38 vorgesehen sein, um die Tragfähigkeit der Aufnahmeteile 26' bis 27" zu erhöhen.

Während das Profilteil 38( Fig. 2 ) im Querschnitt U-förmig ist, gilt dies grundsätzlich auch für das Profilteil 35. Nur seine freien, als Aufnahmeteile 27', 27" dienenden Enden sind im Querschnitt gegebenenfalls L-förmig. Außerdem weist das Profilteil 35 im Inneren 33 des Fahrzeugrahmens 7 eine Öffnung 39 auf. Durch sie werden die Energieversorgungsleitungen geführt, die im Falle von hydraulischen Antrieben 30, 31 die notwendige Energieversorgung zu Pumpen herstellen, die wiederum von dem Fahrzeugmotor 4 als Hauptmotor angetrieben werden.

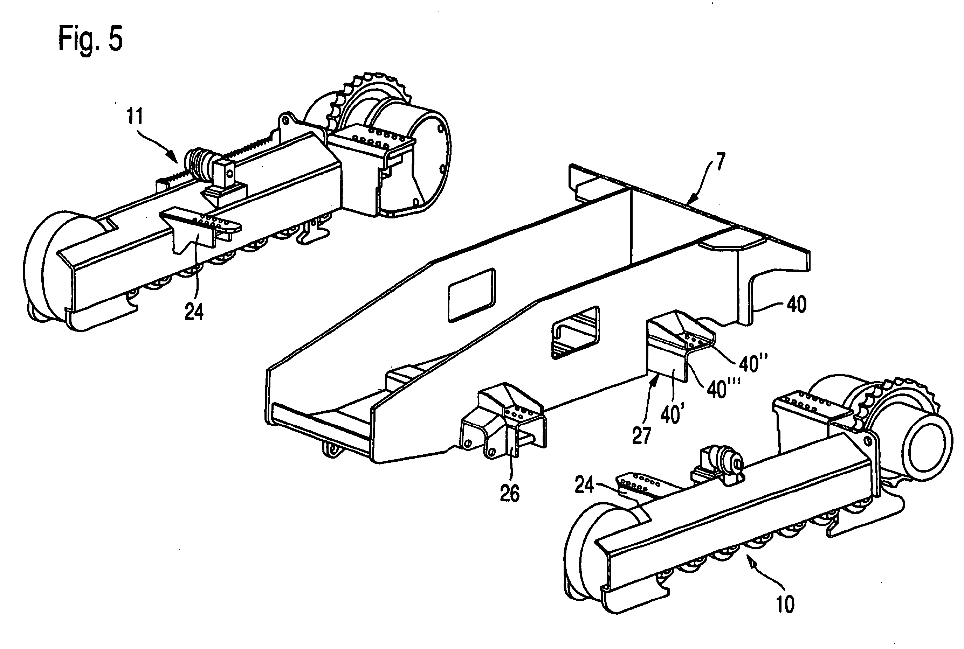

Die perspektivischen Darstellungen des Fahrzeugrahmens 7 und der beiden Fahrwerkträger 10, 11 in Fig. 5 läßt einige Details besser erkennen als die Darstellungen in den Fig. 2 und 3. So ist das unmittelbar als Aufnahme- und Abstützmittel 27 dienende Teil im Querschnitt winkelförmig und dabei nach unten und in Richtung zum hinteren Ende 40 des Fahrzeugrahmens 7 offen. Es besteht aus einem senkrecht stehenden Schenkel 41 und einem weiteren Schenkel 40", der sich vom oberen Ende 40'" des ersten Schenkels 40' horizontal in einer Richtung zum hinteren Ende 40 des Fahrzeugrahmens 7 erstreckt.

Die Spurbreitenveränderung läßt sich daher mit ausreichend Spiel sehr leicht durchführen, auch wenn die vorderen Aufnahme- und Abstützmittel 26 am Fahrzeugrahmen 7 die zugehörigen Tragemittel 24 an den Fahrwerkträgern 10, 11 formschlüssig oder nahezu formschlüssig aufnehmen. Dennoch sind die Fahrwerkträger 10, 11 aufgrund der L-förmigen Gestaltung der Aufnahme- und Abstützmittel 27 in der Lage, die auftretenden Kräfte in Fahrtrichtung nach vorne vollständig auf den Fahrzeugrahmen 7 zu übertragen.

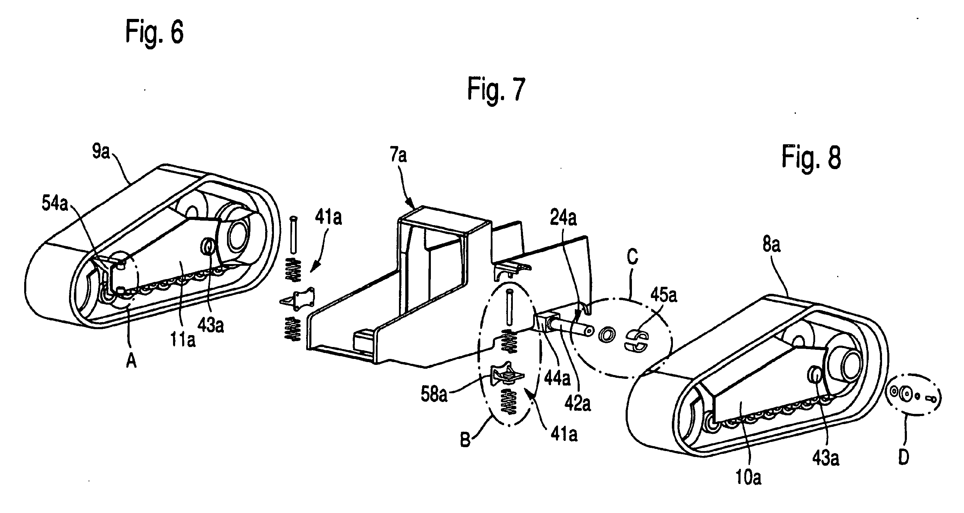

Die Fig. 6 bis 8 zeigen ein rechtes und ein linkes Fahrwerk 8a bzw. 9a und einen Fahrzeugrahmen 7a eines abgewandelten Ausführungsbeispieles, wobei gleiche Teile grundsätzlich dieselben Bezugszahlen wie das erste Ausführungsbeispiel und zusätzlich den Buchstabenindex a aufweisen.

Die Befestigung und Lagerung der beiden Fahrwerke 8a und 9a am Fahrzeugrahmen 7a erfolgt in dessen hinteren Bereich jeweils schwenkbar und im vorderen Bereich mit Hilfe von Federeinrichtungen 41a. Für die schwenkbare Lagerung sind je Fahrzeugseite als Tragemittel 24a ein im Querschnitt runder Tragarm bzw. eine Achse 42a (Schwenkachse) vorgesehen. Sie liegen im zusammengebauten Zustand jeweils in einer entsprechenden Bohrung 43a in jedem der beiden Fahrwerkträger 10a bzw. 11a.

Die Achsen 42a sind an dem Fahrzeugrahmen 7a mit Hilfe eines im Querschnitt z.B. rechteckigen Zwischenstückes 44a starr befestigt.

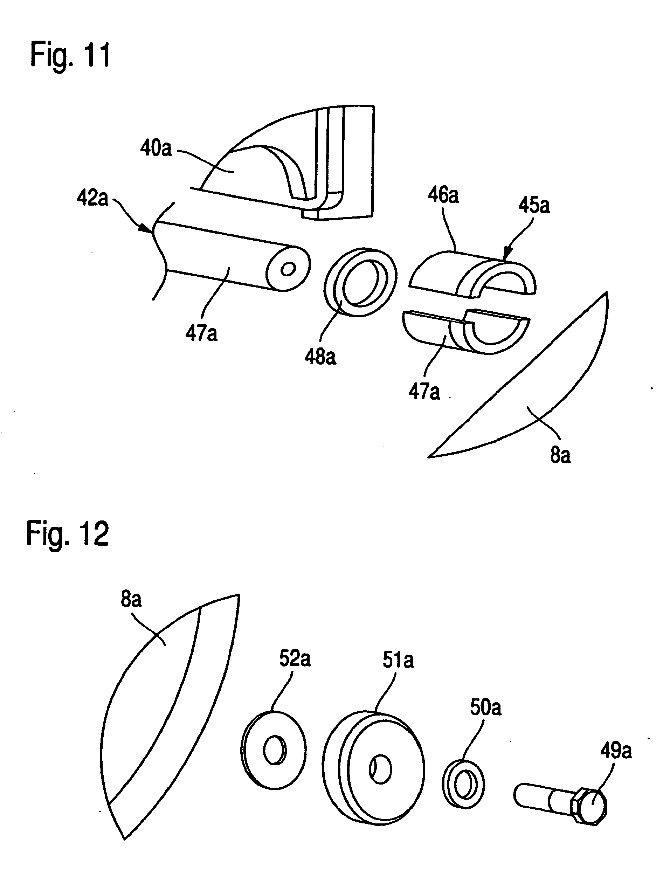

Zur lagegenauen sowie relativ zum Fahrzeugrahmen 7a schwenkbaren und insbesondere eine Änderung der Spurbreite ermöglichenden Anordnung der Fahrwerkträger 10a und 11a auf den Achsen 42a dient ferner jeweils eine Distanzbuchse 45a. Gemäß dem in den Fig. 7 und 11 dargestellten Ausführungsbeispiel besteht die Distanzbuchse 45a aus zwei Halbschalen 46a und 47a. Sie können daher auf die Achse 42a aufgesetzt oder von dieser abgenommen werden, ohne daß dazu das gesamte Fahrwerk 8a bzw. 9a vollständig von der Achse 42a abgezogen werden muß.

Im zusammengebauten Zustand befindet sich die Distanzbuchse 45a auf der Achse 42a entweder rahmenseitig (große Spurbreite) oder im Bereich des äußeren Endes 47a der Achse 42a zur Erzielung einer geringen Spurbreite (Fig. 11). Hierdurch ergeben sich für die Lage des Fahrwerkes 8a bzw. 9a zwei unterschiedliche Positionen für die Spurbreite.

Zur ordnungsgemäßen Anordnung der Distanzbuchse 45a auf der Achse 42a ist ferner noch ein geschlossener Innenring 48a gemäß dem in den Fig. dargestellten Ausführungsbeispiel vorgesehen.

Unabhängig davon, ob sich die am hinteren Ende des Fahrzeuges unmittelbar zur Spurbreitenveränderung dienende Distanzbuchse 45a auf der Achse 42a innen oder außen befindet, dienen zur Befestigung des Fahrwerkes 8a bzw. des Fahrwerkes 9a jeweils gemäß der Einzelheit D in Fig. 8 eine Befestigungsschraube 49a (Fig. 12) sowie eine kleine Beilegscheibe 50a, ein großes, ringförmiges Andrückstück 51a sowie eine weitere Ringscheibe 52a.

Die am vorderen Ende 53a des Fahrzeugrahmens 7a beidseitig jeweils vorgesehene Federeinrichtung 41a umfaßt gemäß Fig. 6 fahrwerkseitig eine Konsole 54a, an der eine Haltestange 55a jeweils an ihren beiden Enden angeordnet ist.

Die Haltestange 55a dient zur lagegenauen Fixierung von zwei Schraubenfedern 56a bzw. 57a. Die Haltestange 55a durchgreift im zusammengebauten Zustand die beiden Federn 56a und 57a und ferner eine Trageund Führungskonsole 58a, die eine Führungshülse 59a für die Haltestange 55a aufweist.

Mit ihren einander abgewandten Enden 60a und 61a liegend die beiden Federn 56a und 57a im zusammengebauten Zustand an Schenkeln 62a bzw. 63a der Konsole 54a an.

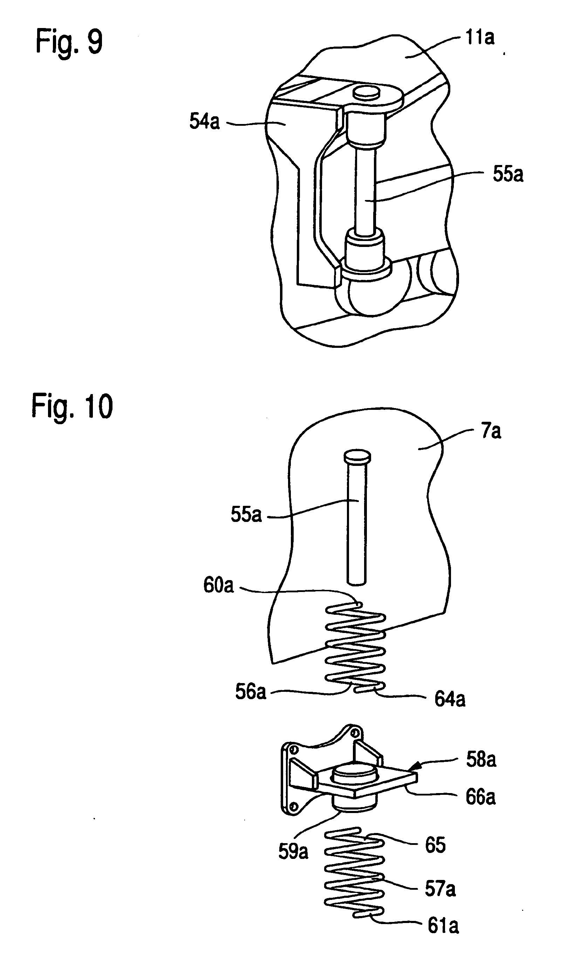

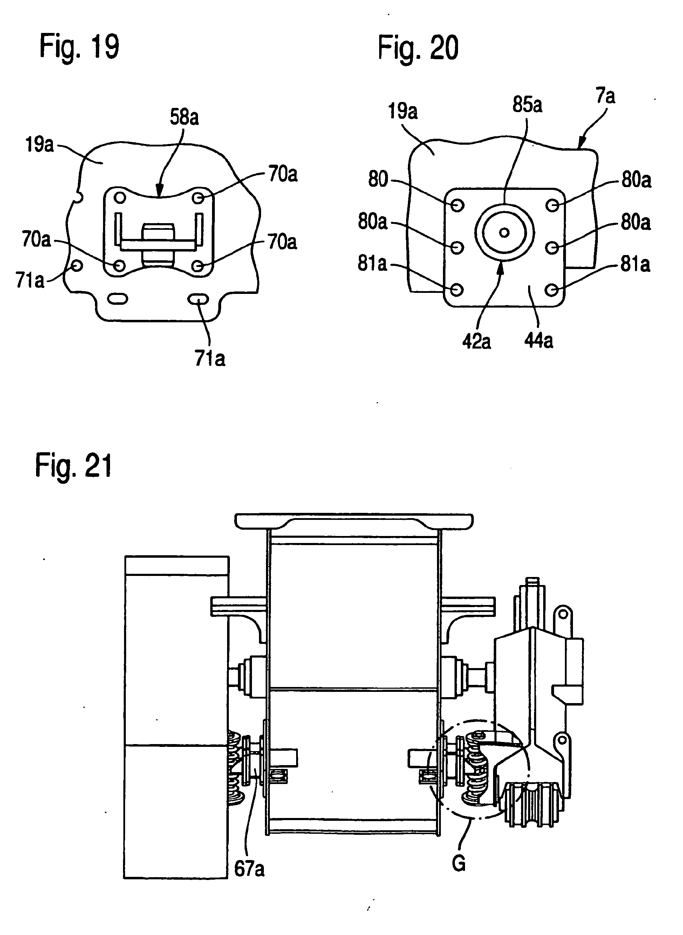

Die beiden einander zugewandten Enden 64a und 65a der beiden Federn 56a und 57a liegen im zusammengebauten Zustand an einer Halteplatte 66a der Trage- und Führungskonsole 58a an, in der sich die Führungshülse 59a befindet (Fig. 10 bzw. Fig. 21).

Die Trage- Führungskonsolen 58a werden grundsätzlich außen an dem Fahrzeugrahmen 7a bzw. rahmenseitig befestigt bzw. angeschraubt (Fig. 7 bzw. 13 und 14).

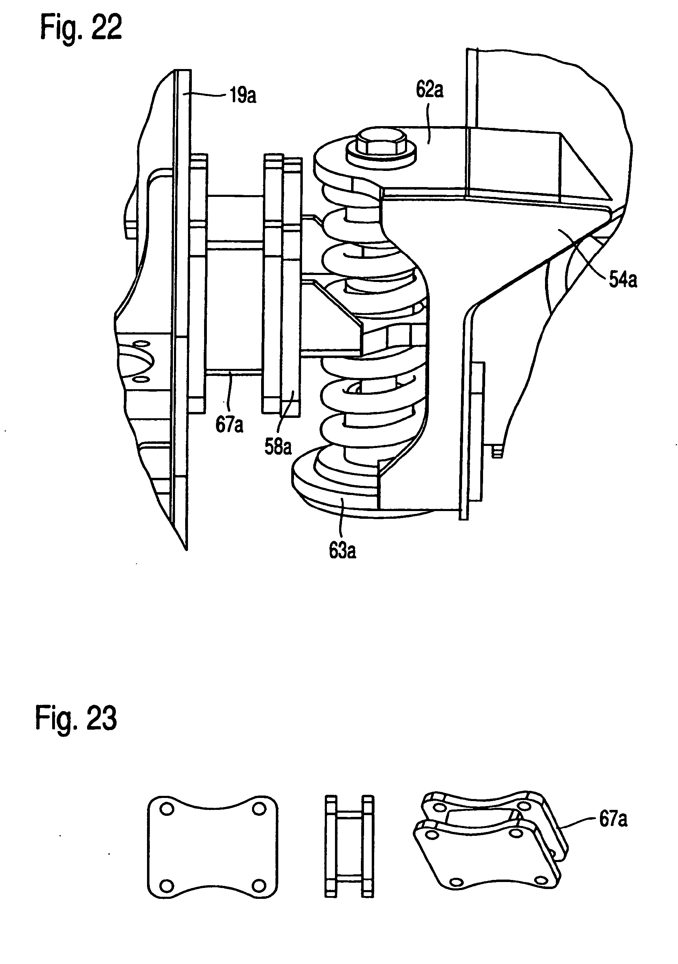

Dies kann unmittelbar auf den Seitenwänden 18a bzw. 19a des Fahrzeugrahmens 7 geschehen oder unter zusätzlicher Verwendung eines Distanzstückes 67a (Fig. 22 bzw. 23).

Das Distanzstück 67a ist gemäß Ausführungsbeispiel im Querschnitt H-förmig und besteht in einstückiger Ausbildung aus einem mittig angeordneten Block und zwei auf diesem fluchtend angeordneten Platten mit Befestigungsöffnungen.

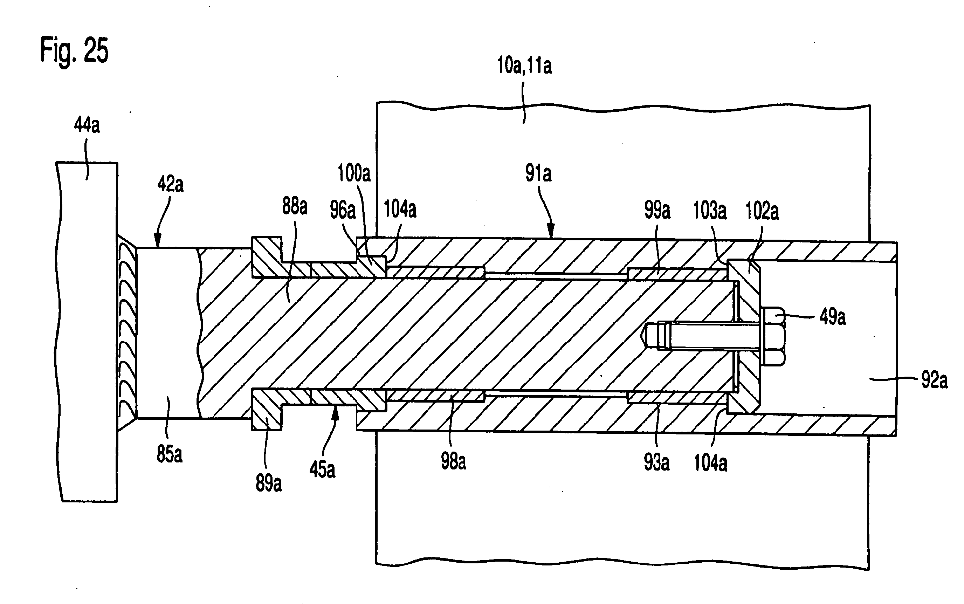

Befinden sich die Distanzhülsen 45a jeweils nahe bei den Seitenwänden 18a bzw. 19a des Fahrzeugrahmens 7a, wie dies in Fig. 25 dargestellt ist, so versteht es sich, daß die Trage- und Führungskonsolen 58a unter Verwendung von Distanzstücken 67a außen auf den Seitenwänden 18a und 19a des Fahrzeugrahmens 7a befestigt sein müssen. Entsprechendes geht aus den Fig. 21 und 22 hervor.

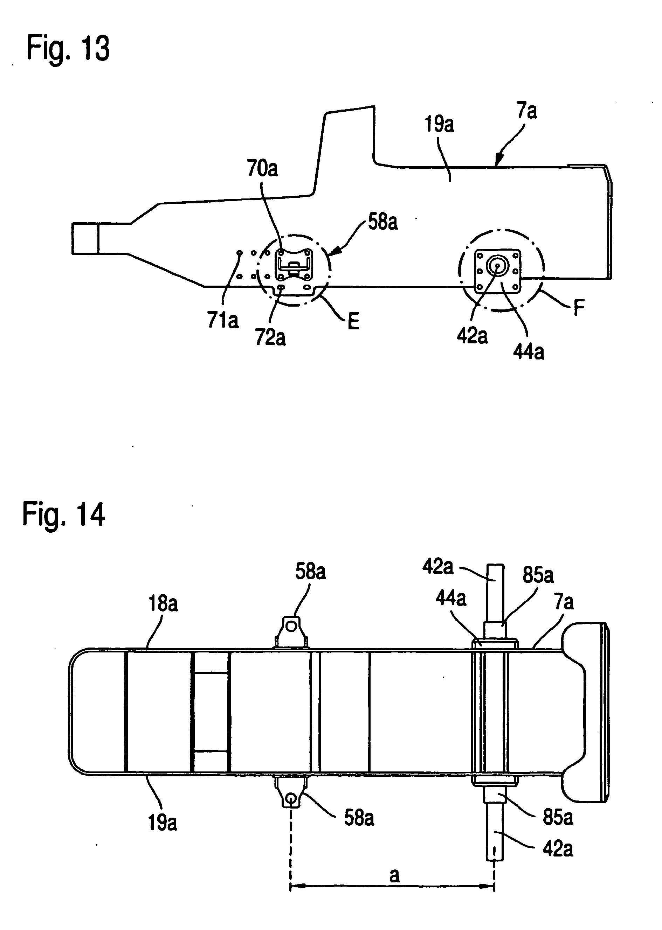

Die Fig. 13 bis 20 zeigen ferner verschiedene Befestigungsmöglichkeiten für die Achsen 42a und für die Trage- und Führungskonsolen 58 a jeweils an den Seitenwänden 18a bzw. 19a des Fahrzeugrahmens 7a. Gemäß dem in den Fig. dargestellten Ausführungsbeispiel weist die Trage- und Führungskonsole 58a in ausreichender Anzahl Bohrungen 70a für Befestigungsschrauben auf. Entsprechende Bohrungen 71a, bei denen es sich um einfache Bohrungen oder um Langlöcher handeln kann, befinden sich in den Seitenwänden 18a bzw. 19a. Konkret sind derartige Bohrungen 71a in größerer Anzahl derart vorgesehen, daß die Trage- und Führungskonsolen 58a nicht nur an einer einzigen, definiert vorgegebenen Stelle am Fahrzeugrahmen 7a befestigt werden können, sondern an mehreren Stellen in unterschiedlichem Abstand zur Achse 42a sowie auf unterschiedlichem Höhenniveau.

Um die Trage- und Führungskonsolen 58a auf unterschiedlichem Höhenniveau am Fahrzeugrahmen 7a befestigen zu können, sind weitere, zusätzliche Bohrungen 72a oder Langlöcher zu der ersten, in Fig. 13 dargestellten Position unterhalb von den für die erste Befestigung (Fig. 13) vorgesehenen Bohrungen 71a angeordnet. Die Tage- und Führungskonsolen 58a lassen sich daher unmittelbar von einer höher gelegenen Befestigungsstelle an eine niedriger gelegene Stelle am Fahrzeugrahmen 7a versetzen und umgekehrt.

Die beiden Seitenwände 18a und 19a weisen daher wesentlich mehr Bohrungen 71a bzw. Langlöcher 71a auf als für eine einzige, lagegenau Befestigung der Trage- und Führungskonsolen 58a erforderlich wären.

Wie bereits bei der Ausführungsform der Fig. 7 dargestellt ist, befindet sich die Achse 42a an einem Zwischenstück 44a. Dieses Zwischenstück 44a kann im Querschnitt quadratisch oder auch gemäß den in den Fig. 13 und 15 bzw. 20 dargestellten Zwischenstücken 44a abweichend von der quadratischen Form rechteckig sein. Dabei befindet sich die jeweilige Achse 42a an dem Zwischenstück 44a in einer außermittig befestigten Lage.

Die Zwischenstücke 44a weisen gemäß den Fig. 13, 15 und 20 mehrere Bohrungen 80a auf und entsprechende Bohrungen, die in der Fig. 20 unter dem Zwischenstück 44a liegen, befinden sich in den Seitenwänden 18a und 19a des Fahrzeugrahmens 7a, damit die Zwischenstücke 44a mit ihren Achsen 42a in zweckmäßiger Weise mit Hilfe von ebenfalls nicht dargestellten Schrauben an den Seitenwänden 18a und 19a des Fahrzeugrahmens 7a befestigt werden können.

Zur Erzielung einer unterschiedlichen Höheneinstellung der Achsen 42a befinden sich zusätzliche Bohrungen 81a (Fig. 20) in dem bzw. den Zwischenstücken 44a. Diese zusätzlichen Bohrungen 81a werden im Falle einer Befestigung der Zwischenstücke 44a in einer ersten Position gemäß den Fig. 13 und 20 nicht benötigt.

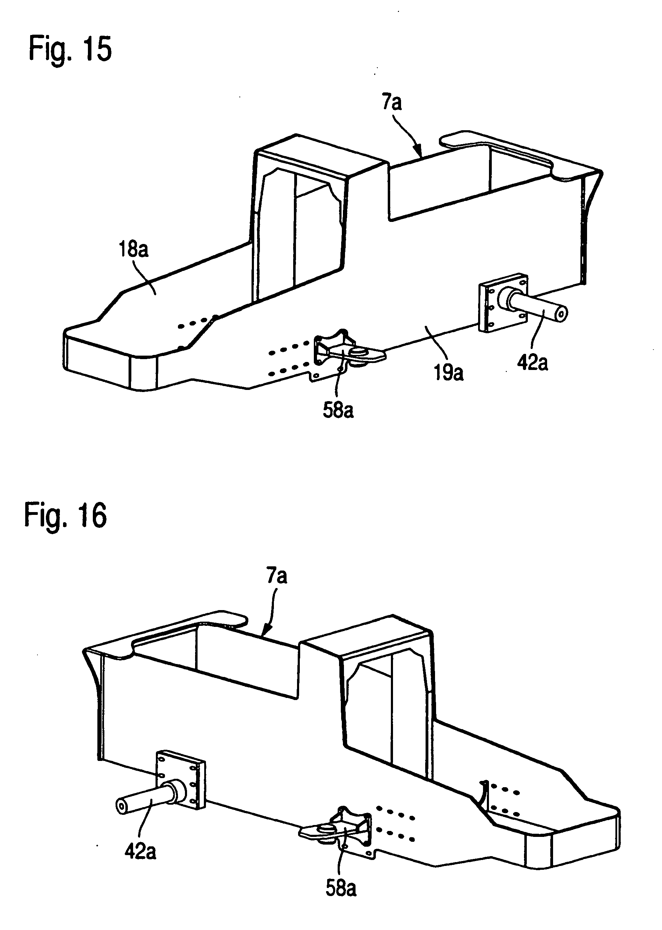

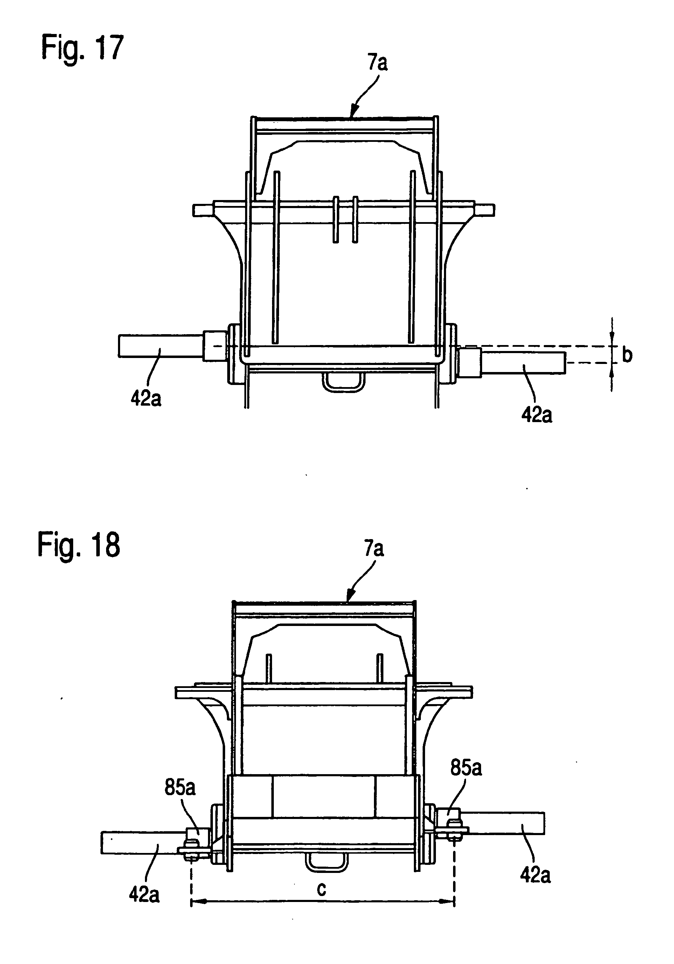

Um die Achsen 42a auf den Seitenwänden 18a bzw. 19a auf einem anderen Höhenniveau anzuordnen, werden die Zwischenstücke 44a in einer um 180 Grad gedrehten Lage an den Seitenwänden 18a und 19a befestigt. Nunmehr liegen die Bohrungen 81a an Stelle der oberen Bohrungen 80a gemäß Fig. 20 oben (nicht dargestellt). Die Achse 42a erhält dadurch eine tiefer liegende Position , wie dies aus einem Vergleich der Fig. 15 und 16 hervorgeht bzw. auch anhand der Fig. 17 und 18 zu erkennen ist. Dort befinden sich die Achsen 42a ( lediglich zu Demonstrationszwecken) auf der jeweils rechten Seite des Fahrzeugrahmens 7a auf einem anderen Höhenniveau als die Achsen 42a auf seiner anderen Seite.

Damit ist es nicht nur möglich, den Abstand der Fahrwerkträger 10a und 11a zum Fahrzeugrahmen 7 bzw. 7a zu verändern, sondern es kann auch eine Anordnung der Fahrwerkträger und 10 bzw. 11 bzw. 10a und 11a auf unterschiedlichem Höhenniveau sowohl im Bereich der Achsen 42a als auch im Bereich der Federeinrichtungen 41a erzielt werden.

Ein Raupenfahrzeug gemäß den in den Fig. dargestellten Ausführungsbeispielen weist somit nicht nur die Möglichkeit zur Veränderung der Spurbreite (Abstand **c** gemäß Fig. 18) auf, sondern auch der Abstand **a** (Fig. 14) der Achsen 42a von den Trage- und Führungskonsolen 58a der Federeinrichtung 41a läßt sich verstellen. Schließlich ist auch die Lage bzw. das Höhenniveau der Achsen 42a am Fahrzeugrahmen 7a entsprechend dem Abstand **b** gemäß Fig. 17 veränderbar. Gleiches gilt für das Höhenniveau der Trage- und Führungskonsolen 58a. Zur Spurbreitenveränderung entsprechend dem Abstand c in Fig. 18 dienen die Distanzbuchsen 45a und die Distanzstücke 67a gemäß den Fig. 21 bis 23. Die Abstände **a** und **b** werden mit Hilfe zusätzlich vorgesehener Bohrungen entweder in den Seitenwänden 18a und 19a oder in den Zwischenstücken 44a erzielt.

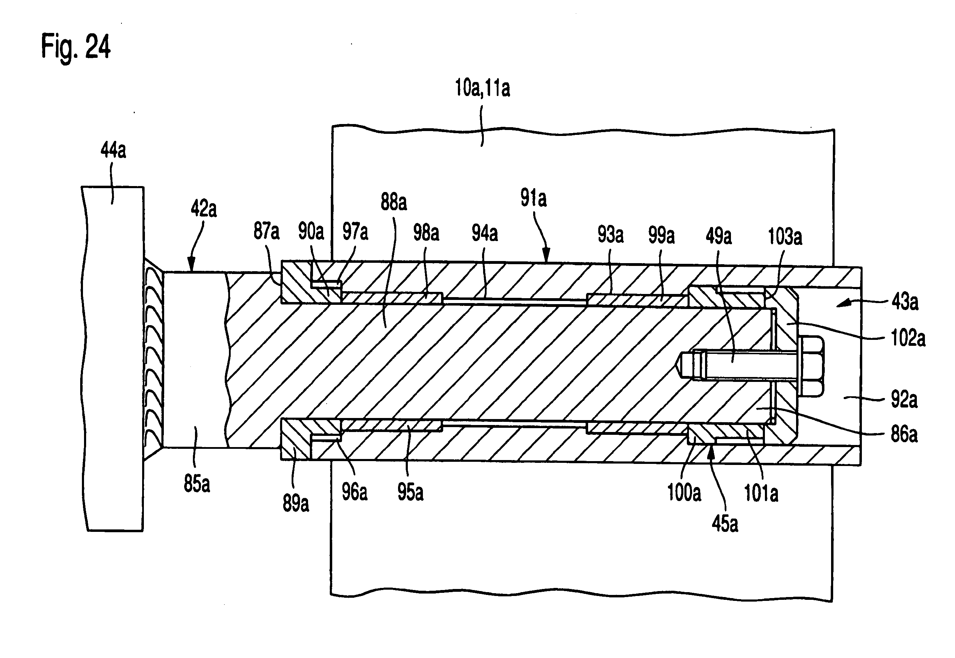

Die beiden Fig. 24 und 25 zeigen zum Teil im Schnitt die als Tragarm und als Schwenkachse dienende Achse 42a, die zum Beispiel an dem Zwischenstück 44a zur Befestigung am Fahrzeugrahmen 7a (Fig. 13) angeschweißt ist. Die Achse 42a weist im Bereich ihrer Befestigungsstelle ein als Anschlag dienendes Achsstück 85a mit größerem Durchmesser auf als der Rest der Achse 42a bis zu ihrem freien Ende 86a. An einem rechtwinkligen Absatz 87a geht das Achsstück 85a in das Achsstück 88a mit dem geringeren Durchmesser über. An diesem Absatz 87a liegt eine mit dem Achsstück 88a durchmessergleiche Hülse 89a achsial an und greift mit einem ringförmigen Vorsprung 90a in eine Tragehülse 91a. Jeweils eine Tragehülse 91a ist in jedem Fahrwerkträger 10a bzw. 11a angeordnet und weist eine Bohrung 43a auf, die auch in den Fig. 6 und 8 dargestellt ist.

Der Außenumfang der Tragehülse 91a ist gemäß Ausführungsbeispiel zylindrisch, wie dies in den Fig. 24 und 25 dargestellt ist.

Die Bohrung 43a in jeder der Tragehülsen 91a ist mehrfach abgesetzt. An ein erstes Bohrungsstück 92a mit großem Durchmesser schließt ein Bohrungsstück 93a mit geringerem Durchmesser sowie ein mittleres Bohrungsstück 94a an, an das sodann in Richtung zu dem Absatz 87a hin wiederum ein Bohrungsstück 95a mit einem Durchmesser wie das Bohrungsstück 93a und schließlich ein relativ kurzes Bohrungsstück 96a mit einem Innendurchmesser wie das Bohrungsstück 92a anschließen.

In dem kurzen Bohrungsstück 96a liegt der ringförmige Vorsprung 90a der Hülse 89a bei geringer Spurbreiten-Einstellung gemäß Fig. 24. Ferner befindet sich in diesem Fall ein ringförmiger Luftspalt 97a zwischen dem ringförmigen Vorsprung 90a und der Innenkontur des kurzen Bohrungsstückes 96a.

Die beiden Bohrungsstücke 93a und 95a dienen zur Aufnahme von jeweils kurzen Lagerhülsen 98a und 99a mit jeweils geringer Materialstärke.

In dem Bohrungsstück 92a befindet sich im Falle der geringen Spurbreiten-Einstellung die Distanzbuchse 45a. Sie sitzt auf dem freien Ende 86a der Achse 42a und weist gemäß Ausführungsbeispiel in einstückiger Ausbildung ein achsial innen liegendes Ringstück 100a mit größerem Außendurchmesser und ein Ringstück 101a mit etwas geringerem Außendurchmesser auf. Stirnseitig an dem Ringstück 101a liegt das scheibenförmige Andruckstück 51a (siehe auch Fig. 12) mit einer ringförmigen Stirnfläche 103a an.

Mit der Befestigungsschraube 49a (siehe auch Fig. 12) wird das Andruckstück 51a in einer Befestigungsposition gehalten, so daß auch der jeweilige Fahrwerkträger 10a bzw. 11a sicher und zuverlässig mit dem Fahrzeugrahmen 7a verbunden ist.

Die Distanzbuchse 45a kann einstückig sein oder sie besteht - wie bereits oben ausgeführt wurde, aus zwei Halbschalen 46a, 47a (Fig. 11).

Zum Verändern der Spurbreite wird die Befestigungsschraube 49a (Fig. 24) gelöst, woraufhin der Fahrwerkträger 10a, 11a soweit achsial von der Achse 42a abgezogen wird, bis sich die Distanzbuchse 45a entnehmen läßt. Daraufhin wird die vorzugsweise aus zwei Halbschalen bestehende Distanzbuchse 45a nahe bei dem als Anschlag dienenden Achsstück 85a auf das Achsstück 88a der Achse 42a aufgesetzt. Dies geschieht derart, daß das Ringstück 101a an dem ringförmigen Vorsprung 90a der Hülse 89a anliegt. Sodann wird der Fahrwerkträger 10a, 11a wieder achsial auf die Achse 42a aufgeschoben, bis die Tragehülse 91a das Ringstück 100a mit ihrem kurzen Bohrungsstück 96a bis zum Anschlag an einer Stirnfläche 104a aufnimmt (Fig. 25). Sodann wird noch die Befestigungsschraube 49a angezogen, woraufhin der Fahrwerkträger 10a bzw. 11a mit größerer Spurbreite entsprechend der achsialen Länge der Distanzbuchse 45a fixiert ist.

In der neuen Position hält die Andruckscheibe 102a (siehe Fig. 25) den Fahrwerkträger 10, 11a über die in ihm achsial unbeweglich angeordnete Tragehülse 91a, da sie mit ihrer Stirnfläche 103a an einem Absatz 104a zwischen dem Bohrungsstück 92a und dem Bohrungsstück 93a anliegt.

Auch werden achsiale Kräfte über die Lagerhülsen 98a und 99a übertragen.

Zur Erzielung der erwünschten Schwenkbewegung zwischen den Fahrwerkträgern 10a und 11a einerseits und dem Fahrzeugrahmen 7a andererseits dienen die beiden kurzen Lagerhülsen 98a und 99a.

Es versteht sich schließlich, daß mannigfache Abwandlungen und Weiterbildungen der Erfindungen möglich sind, ohne von dem grundsätzlichen Erfindungsgedanken abzuweichen. So ist es zum Beispiel auch möglich, an Stelle des Achsstück 85a mit einem Durchmesser, der größer ist als der des Achsstückes 88a eine Distanzbuchse 45a vorzusehen, die einschalig oder auch zweischalig sein kann und von einer Position nahe bei dem Zwischenstück 44a in eine Position nahe bei dem freien Ende 86a der Achse 42a verlegt werden kann. Die Erfindung ist daher nicht auf die in den Fig. dargestellten und in der Beschreibung konkret beschriebenen Ausführungsbeispiele beschränkt.

## Patentansprüche

1. Raupenfahrzeug mit veränderbarer Spurbreite, insbesondere Baufahrzeug (1) mit mindestens einem Werkzeug (3) und/oder Fahrzeug für landwirtschaftliche Zwecke mit jeweils mindestens einem Fahrzeugmotor (4) und einem weitere Komponenten aufweisenden Oberfahrzeug (5) und mit einem Unterfahrzeug (6), das einen Fahrzeugrahmen (7) umfasst, an dem beidseitig je ein Fahrwerk (8, 9) mit einem Fahrwerkträger (10, 11) für mindestens je ein Antriebsrad (12, 13), ein Umlenkrad (14) und für Stützräder (15) für Raupen (16, 17) vorgesehen ist, wobei der Abstand der Raupen (16, 17) vom Fahrzeugrahmen (7) veränderbar ist, wobei mindestens einer der beiden Fahrwerkträger (10, 11) in unterschiedlichem Abstand quer zum Unterfahrzeug (6) mit Hilfe von seitlich vorne und hinter angeordneten Tragemittel (24, 25) sowie mit Hilfe von Aufnahme- und Abstützmitteln (26, 27) sowie mit Hilfe von Halte- und Lösemitteln (28) in lösbarer Weise am Fahrzeugrahmen (7) befestigbar ist,
**dadurch gekennzeichnet, dass**
als Tragemittel (24a) und als Aufnahme- und Abstützmittel (26a) je Fahrzeugseite ein im Querschnitt runder Tragarm in Gestalt einer Achse (42a), sowie mindestens eine lösbare Distanzbuchse (45a) nahe dem einen Ende des Fahrzeugrahmens (7a) und mindestens eine Federeinrichtung (41a) und ein lösbares Distanzstück (67a) nahe dem anderen Ende des Fahrwerkrahmens (76a) jeweils zusammen mit Halter- und Lösemitteln vorgesehen sind, wobei
die Federeinrichtung (41 a) mindestens eine Feder (56a, 57a) und fahrwerkseitig eine Konsole (54a) und rahmenseitig eine Trage- und Führungskonsole (58a) umfasst und mit deren Hilfe am Fahrzeugrahmen (7a) und an den Fahrwerkträgern (10a, 11a) oder unter zusätzlicher Verwendung von mindestens einem Distanzstück (67a) befestigbar ist.

2. Raupenfahrzeug nach Anspruch 1,
**dadurch gekennzeichnet, dass**
die Tragemittel (24, 25) einerseits und die Aufnahme- und Abstützmittel (26, 27) andererseits am Fahrwerkträger (10, 11) und/oder am Fahrzeugrahmen (7) angeordnet sind.

3. Raupenfahrzeug nach Anspruch 1,
**dadurch gekennzeichnet, dass**
als Tragemittel (24, 25) ein frei auskragender Tragarm (24', 25') vorgesehen ist.

4. Raupenfahrzeug nach Anspruch 3,
**dadurch gekennzeichnet, dass**
der Tragarm (24') im Querschnitt mindestens teilweise U-förmig ist.

5. Raupenfahrzeug nach Anspruch 3,
**dadurch gekennzeichnet, dass**
der Tragarm (25') im Querschnitt mindestens teilweise L-förmig ist.

6. Raupenfahrzeug nach Anspruch 1,
**dadurch gekennzeichnet, dass**
die Aufnahme- und Abstützmittel (26, 27) jeweils Aufnahmeteile (26', 26", 27', 27") mit U- und/oder L-förmigem Querschnitt sind.

7. Raupenfahrzeug nach Anspruch 4,
**dadurch gekennzeichnet, dass**
die im Querschnitt U-förmigen Tragarme (24') mit nach unten offenem Querschnitt am Fahrzeugrahmen (7) und/oder am Fahrwerkträger (10, 11) angeordnet sind.

8. Raupenfahrzeug nach Anspruch 5,
**dadurch gekennzeichnet, dass**
die Aufnahme- und Abstützmittel (26, 27) mit nach unten offenem Querschnitt am Fahrzeugrahmen (7) und/oder am Fahrwerkträger (10, 11) angeordnet sind.

9. Raupenfahrzeug nach Anspruch 2,
**dadurch gekennzeichnet, dass**
die Aufnahme- und Abstützmittel (26, 27) seitlich über Seitenwände (18, 19) des Fahrzeugrahmens (7) frei auskragend angeordnet sind.

10. Raupenfahrzeug nach Anspruch 9,
**dadurch gekennzeichnet, dass**
die seitlich am Fahrzeugrahmen (7) als Aufnahme- und Abstützmittel (26, 27) frei auskragenden Aufnahmeteile (26', 26", 27', 27") sich einstückig durch das Innere (33) des Fahrzeugrahmens (7) erstreckende Profilteile (34, 35) sind.

11. Raupenfahrzeug nach Anspruch 10,
**dadurch gekennzeichnet, dass**
mindestens ein Profilteil (35) eine in das Innere (33) des Fahrzeugrahmens (7) gerichtete Durchtrittsöffnung (39) aufweist.

12. Raupenfahrzeug nach Anspruch 1,
**dadurch gekennzeichnet, dass**
ein Antrieb (30, 31) für jede Raupe (16, 17) unmittelbar an dem jeweiligen Fahrwerkträger (10, 11) angeordnet ist.

13. Raupenfahrzeug nach Anspruch 1,
**dadurch gekennzeichnet, dass**
mindestens ein am Fahrzeugrahmen (7) angeordnetes Aufnahme- und Abstützmittel (27) im Querschnitt winkelförmig ist, wobei ein Schenkel (40') des Aufnahme- und Abstützmittels (27) senkrecht steht und sich der andere Schenkel (40") vom oberen Ende (40''') des ersten Schenkels (40') horizontal in einer Richtung zum hinteren Ende (40) des Fahrzeugrahmens (7) erstreckt.

14. Raupenfahrzeug nach einem der Ansprüche 1 bis 13,
**dadurch gekennzeichnet, dass**
die Distanzbuchse (45a) frei zur Spurbreitenveränderung aus der Achse (42a) aus einer Position axial innen und eine Position axial außen umsteckbar ist.

15. Raupenfahrzeug nach einem der Ansprüche 1 bis 13,
**dadurch gekennzeichnet, dass**
die Distanzhülse (42a) aus Halbschalen (46a, 47a) besteht.

16. Raupenfahrzeug nach einem der Ansprüche 1 bis 15,
**dadurch gekennzeichnet, dass**
der Fahrwerkträger (10a, 11a) mittelbar oder unmittelbar eine Bohrung (43a) zur Aufnahme einer zugleich als Tragarm und als Schwenkachse dienenden Achse (42a) sowie Befestigungsmittel aufweist.

17. Raupenfahrzeug nach einem der Ansprüche 1 bis 16,
**dadurch gekennzeichnet, dass**
die Distanzhülse (45a) im Falle der geringen Spurbreite auf der Achse (42a) axial außen an deren freien Ende (86a) angeordnet ist.

18. Raupenfahrzeug nach einem der Ansprüche 1 bis 17,
**dadurch gekennzeichnet, dass**
die Distanzbuchse (45a) mindestens teilweise im Inneren einer die Achse (42a) aufnehmenden Bohrung (43a) angeordnet ist, die sich unmittelbar oder mittelbar im Fahrwerkträger (10a, 11a) befindet.

19. Raupenfahrzeug nach einem der Ansprüche 1 bis 18,
**dadurch gekennzeichnet, dass**
sich die Distanzhülse (45a) im Falle der großen Spurbreite rahmenseitig auf der Achse (45a) zwischen einem ringförmigen, als Achsanschlag dienenden Absatz (87a) und dem Fahrwerkträger (10a, 11a) befindet.

20. Raupenfahrzeug nach Anspruch 19,
**dadurch gekennzeichnet, dass**
die Distanzhülse (45a) im Falle der großen Spurbreite auf der Achse (42a) rahmenseitig sowie teilweise in der die Achse (42a) aufnehmenden Bohrung (43a) im Fahrwerkträger (10a, 11a) angeordnet ist.

## Claims

1. A tracked vehicle with variable gauge, in particular a building vehicle (1) with at least one tool (3) and/or a vehicle for agricultural purposes, having at least one vehicle motor (4) and a vehicle superstructure (5) including further components and having a vehicle substructure (6) comprising a vehicle frame (7), on either side of which one running gear (8, 9) with one running-gear support (10, 11) for at least one driving wheel (12, 13) each, one return wheel (14) and for support wheels (15) for tracks (16, 17) is provided, the distance of the tracks (16, 17) from the vehicle frame (7) being variable and at least one of the two running-gear supports (10, 11) being detachably fastenable on the vehicle frame (7) at different distances at right angles to the vehicle substructure (6) by means of carrying means (24, 25) as well as by means of holding and supporting means (26, 27) as well as by means of fastening and detaching means (28),
**characterized in that**
on either side of the vehicle, a carrying arm with circular cross-section in the form of an axle (42a) as well as at least one detachable spacer sleeve (45a) near one end of the vehicle frame (7a) and at least one spring device (41 a) and one detachable spacer piece (67a) near the other end of the vehicle frame (76a) are provided, in each case together with fastening and detaching means, as carrying means (24a) and as holding and supporting means (26a),
the spring device (41 a) comprising at least one spring (56a, 57a) and, on the running-gear side, a bracket (54a) and, on the frame side, a carrying and guiding bracket (58a), and being fastenable by means of the latters on the vehicle frame (7a) and on the running-gear supports (10a, 11a) or by additionally using at least one spacer piece (67a).

2. The tracked vehicle according to claim 1,
**characterized in that**
the carrying means (24, 25) on the one hand and the holding and supporting means (26, 27) on the other hand are arranged on the running-gear support (10, 11) and/or on the vehicle frame (7).

3. The tracked vehicle according to claim 1,
**characterized in that**
a freely overhanging carrying arm (24', 25') is provided as carrying means (24, 25).

4. The tracked vehicle according to claim 3,
**characterized in that**
at least part of the cross-section of the carrying arm (24') is U-shaped.

5. The tracked vehicle according to claim 3,
**characterized in that**
at least part of the cross-section of the carrying arm (25') is L-shaped.

6. The tracked vehicle according to claim 1,
**characterized in that**
the each of the holding and supporting means (26, 27) are holding parts (26', 26", 27', 27") with a U-shaped and/or L-shaped cross-section.

7. The tracked vehicle according to claim 4,
**characterized in that**
the carrying arms (24') having a U-shaped cross-section are arranged on the vehicle frame (7) and/or on the running-gear support (10, 11) with the opening of their cross-section facing downwards.

8. The tracked vehicle according to claim 5,
**characterized in that**
the holding and supporting means (26, 27) are arranged on the vehicle frame (7) and/or on the running-gear support (10, 11) with the opening of their cross-section facing downwards.

9. The tracked vehicle according to claim 2,
**characterized in that**
the holding and supporting means (26, 27) are arranged in such a way that they laterally freely overhang over side walls (18, 19) of the vehicle frame (7).

10. The tracked vehicle according to claim 9,
**characterized in that**
the holding parts (26', 26", 27', 27") laterally freely overhanging over the vehicle frame (7) as holding and supporting means (26, 27) are profiled parts (34, 35) integrally extending through the interior (33) of the vehicle frame (7).

11. The tracked vehicle according to claim 10,
**characterized in that**
at least one profiled part (35) includes an opening (39) leading into the interior (33) of the vehicle frame (7).

12. The tracked vehicle according to claim 1,
**characterized in that**
a drive (30, 31) for each track (16, 17) is arranged directly on the respective running-gear support (10, 11).

13. The tracked vehicle according to claim 1,
**characterized in that**
at least one holding and supporting means (27) arranged on the vehicle frame (7) has an angular cross-section, one leg (40') of the holding and supporting means (27) being in upright position and the other leg (40") extending, from the upper end (40''') of the first leg (40'), in horizontal position towards the rear end (40) of the vehicle frame (7).

14. The tracked vehicle according to any of claims 1 to 13,
**characterized in that**
the slip-on position of the spacer sleeve (45a) on the axle (42a) can freely be changed between an axially inner position and an axially outer position.

15. The tracked vehicle according to any of claims 1 to 13,
**characterized in that**
the spacer sleeve (45a) consists of half-shells (46a, 47a).

16. The tracked vehicle according to any of claims 1 to 15,
**characterized in that**
the running-gear support (10a, 11a) indirectly or directly includes a drill-hole (43a) for holding an axle (42a) serving as a carrying arm and at the same time as a swivelling axis as well as, as fastening means.

17. The tracked vehicle according to any of claims 1 to 16,
**characterized in that,**
in case of the narrow gauge, the spacer sleeve (45a) is arranged on the free end (86a) of the axle (42a) in an axially outer position.

18. The tracked vehicle according to any of claims 1 to 17,
**characterized in that**
the spacer sleeve (45a) is arranged at least partially inside a drill-hole (43a) holding the axle (42a), said drill-hole (43a) being located directly or indirectly in the running-gear support (10a, 11a).

19. The tracked vehicle according to any of claims 1 to 18,
**characterized in that,**
in case of the wide gauge, the spacer sleeve (45a) is arranged, on the frame side, on the axle (42a) between a ring-shaped shoulder (87a) serving as an axle stop, and the running-gear support (10a, 11a).

20. The tracked vehicle according to claim 19,
**characterized in that,**
in case of the wide gauge, the spacer sleeve (45a) is arranged, on the frame side, on the axle (42a), as well as partially in the drill-hole (43a) holding the axle (42a), located in the running-gear support (10a, 11a).

## Revendications

1. Véhicule chenillé avec écartement variable, en particulier un véhicule de la construction (1) avec au moins un outil (3) et/ou un véhicule agricole, ayant au moins un moteur de véhicule (4) et une superstructure de véhicule (5) comprenant d'autres composants et ayant une substructure de véhicule (6) comprenant un châssis de véhicule (7), des deux côtés duquel est prévu un train de roulement (8, 9) avec un support de train de roulement (10, 11) pour au moins une roue motrice (12, 13) à chaque fois, une roue de renvoi (14) et pour des roues de support (15) pour des trains à chenilles (16, 17), la distance des trains à chenilles (16, 17) du châssis de véhicule (7) étant variable et au moins un des deux supports de train de roulement (10, 11) étant attachable de manière détachable au châssis de véhicule (7) à des distances différentes à angles droits à la substructure de véhicule (6) à l'aide de moyens porteurs (24, 25) ainsi qu'à l'aide de moyens de logement et de support (26, 27) ainsi qu'à l'aide de moyens d'attachement et de détachement (28),
**caractérisé en ce**
**que** des deux côtés du véhicule, sont prévus un bras de support de section circulaire sous forme d'arbre (42a) ainsi qu'au moins une douille d'espacement (45a) détachable près d'un bout du châssis de véhicule (7a) et au moins un dispositif à ressorts (41 a) et une pièce d'écartement détachable (67a) près de l'autre bout du châssis de véhicule (76a), à chaque fois en combinaison avec des moyens d'attachement et de détachement, en tant que moyens porteurs (24a) et en tant que moyens de logement et de support (26a),
le dispositif à ressorts (41 a) comprenant au moins un ressort (56a, 57a) et, du côté du train de roulement, une console (54a) et, du côté du châssis, une console porteuse et de guidage (58a), et étant attachable à l'aide de celles-ci au châssis de véhicule (7a) et aux supports de train de roulement (10a, 11a) ou en utilisant additionnellement au moins une pièce d'écartement (67a).

2. Véhicule chenillé selon la revendication 1,
**caractérisé en ce**
**que** les moyens porteurs (24, 25), d'un côté, et les moyens de logement et de support (26, 27), de l'autre côté, sont ménagés au support de train de roulement (10, 11) et/ou au châssis de véhicule (7).

3. Véhicule chenillé selon la revendication 1,
**caractérisé en ce**
**qu'**un bras de support (24', 25') en porte-à-faux est prévu en tant que moyen porteur (24, 25).

4. Véhicule chenillé selon la revendication 3,
**caractérisé en ce**
**qu'**au moins une partie de la section du bras de support (24') est en forme d'U.

5. Véhicule chenillé selon la revendication 3,
**caractérisé en ce**
**qu'**au moins une partie de la section du bras de support (25') est en forme de L.

6. Véhicule chenillé selon la revendication 1,
**caractérisé en ce**
**que** chacun des moyens de logement et de support (26, 27) sont des pièces de logement (26', 26", 27', 27") avec une section en forme d'U et/ou en forme de L.

7. Véhicule chenillé selon la revendication 4,
**caractérisé en ce**
**que** les bras de support (24') ayant une section en forme d'U sont ménagés au châssis de véhicule (7) et/ou au support de train de roulement (10, 11) avec l'ouverture de leur section tournée vers le bas.

8. Véhicule chenillé selon la revendication 5,
**caractérisé en ce**
**que** les moyens de logement et de support (26, 27) sont ménagés au châssis de véhicule (7) et/ou au support de train de roulement (10, 11) avec l'ouverture de leur section tournée vers le bas.

9. Véhicule chenillé selon la revendication 2,
**caractérisé en ce**
**que** les moyens de logement et de support (26, 27) sont ménagés en porte-à-faux latéral au-delà de panneaux latéraux (18, 19) du châssis de véhicule (7).

10. Véhicule chenillé selon la revendication 9,
**caractérisé en ce**
**que** les pièces de logement (26', 26", 27', 27") se trouvant en porte-à-faux latéral au-delà du châssis de véhicule (7) en tant que moyens de logement et de support (26, 27) sont des pièces profilées (34, 35) qui s'étendent intégralement à travers l'intérieur (33) du châssis de véhicule (7).

11. Véhicule chenillé selon la revendication 10,
**caractérisé en ce**
**qu'**au moins une pièce profilée (35) comprend une ouverture (39) menant dans l'intérieur (33) du châssis de véhicule (7).

12. Véhicule chenillé selon la revendication 1,
**caractérisé en ce**
**qu'**un entraînement (30, 31) pour chaque train à chenille (16, 17) est ménagé directement au support de train de roulement (10, 11) respectif.

13. Véhicule chenillé selon la revendication 1,
**caractérisé en ce**
**qu'**au moins un moyen de logement et de support (27) ménagé au châssis de véhicule (7) a une section angulaire, une branche (40') des moyens de logement et de support (27) étant en position debout et l'autre branche (40") s'étendant, à partir du bout supérieur (40"') de la première branche (40'), en position horizontale vers le bout arrière (40) du châssis de véhicule (7).

14. Véhicule chenillé selon l'une quelconque des revendications 1 à 13,
**caractérisé en ce**
**que** la position emboîtée de la douille d'espacement (45a) sur l'arbre (42a) peut être commutée librement entre une position axialement intérieure et une position axialement extérieure.

15. Véhicule chenillé selon l'une quelconque des revendications 1 à 13,
**caractérisé en ce**
**que** la douille d'espacement (45a) est constituée de semi-monocoques (46a, 47a).

16. Véhicule chenillé selon l'une quelconque des revendications 1 à 15,
**caractérisé en ce**
**que** le support de train de roulement (10a, 11a) comprend indirectement ou directement un alésage (43a) pour recevoir un arbre (42a) servant de bras de support et en même temps en tant qu'axe de pivotement ainsi que de moyen d'attachement.

17. Véhicule chenillé selon l'une quelconque des revendications 1 à 16,
**caractérisé en ce,**
**qu**'en cas de l'écartement étroit, la douille d'espacement (45a) est ménagée au bout libre (86a) de l'arbre (42a) dans une position axialement extérieure.

18. Véhicule chenillé selon l'une quelconque des revendications 1 à 17,
**caractérisé en ce**
**que** la douille d'espacement (45a) est ménagée au moins partiellement à l'intérieur d'un alésage (43a) recevant l'arbre (42a), dit alésage (43a) se trouvant directement ou indirectement dans le support de train de roulement (10a, 11a).

19. Véhicule chenillé selon l'une quelconque des revendications 1 à 18,
**caractérisé en ce,**
**qu**'en cas de l'écartement large, la douille d'espacement (45a) est ménagée, du côté du châssis, sur l'arbre (42a) entre un épaulement annulaire (87a) servant d'arrêt d'arbre, et le support de train de roulement (10a, 11a).

20. Véhicule chenillé selon la revendication 19,
**caractérisé en ce,**
**qu**'en cas de l'écartement large, la douille d'espacement (45a) est ménagée, du côté du châssis, sur l'arbre (42a), ainsi que partiellement dans l'alésage (43a) recevant l'arbre (42a), se trouvant dans le support de train de roulement (10a, 11a).
